# EUROPEAN PATENT APPLICATION

(11) **EP 3 627 208 A1**
(43) Date of publication of application: **25.03.2020**
(21) Application number: 19196015.2
(22) Date of filing: 06.09.2019
(51) Int. Cl.: G02B 27/01, H04N 13/332, H04N 5/74

(54) **ELECTRONIC DEVICE HAVING OPTICAL MEMBER FOR ADJUSTING PERMEATION RATE OF LIGHT AND METHOD FOR OPERATING THEREOF**

(30) Priority: 18.09.2018 KR 20180111539
(71) Applicant: Samsung Electronics Co., Ltd., Gyeonggi-do 16677 (KR)
(72) Inventor: PARK, Goun, 16677 Suwon-si, (KR); LEE, Yunguk, 16677 Suwon-si, (KR); LEE, Jinchoul, 16677 Suwon-si, (KR); YUN, Yongsang, 16677 Suwon-si, (KR)
(74) Representative: HGF Limited

(57) **Abstract**

An electronic device according to an embodiment of the disclosure may include a housing comprising a first surface for mounting a display panel, and a second surface for facing a user who wears the electronic device, a sensor disposed on the second surface to detect that the user is wearing the electronic device, one or more lenses disposed between the first surface and the second surface of the housing, an optical member having an adjustable permeation rate of external light incident to the one or more lenses from outside of the electronic device, and a processor, wherein the processor may be is configured to, when the user is identified as wearing the electronic device, increase the adjustable permeation rate of the optical member, and when the user is identified as not wearing the electronic device, decrease the adjustable permeation rate of the optical member.

## Description

### BACKGROUND

### 1. Technical Field

Various embodiments of the disclosure relate generally to an optical member for protecting the display panel of an electronic device which may be worn on the head of a user.

### 2. Description of Related Art

A portable electronic device may be used more efficiently in association with various peripherals, rather than being used alone. For example, the electronic device may work with a wearable electronic device which is worn on a part of the user's body.

According to one embodiment, the wearable electronic device may include a watch type wearable electronic device which is worn on the wrist of the user and may be configured to perform at least parts of various functions of the portable electronic device, and a head mounted device (HMD) which is worn on the user's head to provide the user with images displayed on the display in a realistic manner.

In particular, the HMD may provide the user with virtual reality (VR) or augmented reality (AR) images, so as to provide the user with more realistic content.

In one example of a head mounted device such as a VR device, the device may include an optical system such as a pair of convex lenses in a housing, where the convex lenses are disposed to face the display to allow the user to view the displayed screen of the HMD through the convex lenses.

### SUMMARY

However, when an electronic device such a virtual reality (VR) device is removed from the user's head and is laid down on a surface such that the convex lenses are oriented toward the sun, light from the sun may be concentrated by convex lenses, which can cause heating or burning of the display.

An electronic device according to an embodiment of the disclosure may include a housing including a first surface for mounting a display panel, and a second surface for facing a user who wears the electronic device, a sensor disposed on the second surface to detect that the user is wearing the electronic device, one or more lenses disposed between the first surface and the second surface of the housing, an optical member having an adjustable permeation rate of external light incident to the one or more lenses from outside of the electronic device, and a processor, wherein the processor may be is configured to, when the user is identified as wearing the electronic device, increase the adjustable permeation rate of the optical member, and when the user is identified as not wearing the electronic device, decrease the adjustable permeation rate of the optical member.

An electronic device according to an embodiment of the disclosure may include a housing including a first surface and a second surface which faces a user who wears the electronic device, a display panel disposed between the first surface and the second surface of the housing, one or more lenses disposed between the second surface of the housing and the display panel, an optical member disposed between the display panel and the one or more lenses and having an adjustable permeation rate of external light incident to the one or more lenses, and a processor, wherein the processor may be configured to adjust an amount of the external light incident to the one or more lenses and transmitted to the display panel.

An operating method of an electronic device which includes a first surface for mounting a display panel, and a second surface facing away from the first surface to face a user, may include identifying whether the user is wearing the electronic device, when the user is identified as wearing the electronic device, controlling an optical member disposed between the first surface and the second surface to be in a first state to transmit external light incident through one or more lenses, identifying whether the user is not wearing the electronic device, and when the user is identified as not wearing the electronic device, controlling the optical member to be in a second state, to reduce a concentration of the external light on the display panel.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a block diagram of an electronic device including an optical member for adjusting a permeation rate of external light, in a network environment according to an embodiment;
FIG. 2 is a block diagram of an electronic device according to an embodiment;
FIG. 3A is a perspective view of an exterior of an electronic device according to an embodiment;
FIG. 3B is a perspective view of the exterior of the electronic device according to an embodiment;
FIG. 4 is a front view of a part of an exterior of an electronic device according to an embodiment;
FIG. 5 is a perspective view of an electronic device without a head band and a mounting portion according to an embodiment;
FIG. 6A is a side view in which part of a first housing is separated from the reset of a housing to show an optical member that is disposed to a second housing according to an embodiment of the disclosure;
FIG. 6B is a side view of the optical member coupled to the housing according to an embodiment of the disclosure;
FIG. 7A is a side view of an optical member according to an embodiment of the disclosure;
FIG. 7B is a plane view of the optical member according to an embodiment of the disclosure;
FIG. 8A is a back view of an electronic device when worn by the user according to an embodiment of the disclosure;
FIG. 8B is a back view of the electronic device when not worn by the user according to an embodiment of the disclosure;
FIG. 9A is an illustration showing light passing through an optical member is diffused or scattered in an electronic device that is not worn by the user according to an embodiment of the disclosure;
FIG. 9B is an illustration showing light passing through the optical member in the electronic device that is worn by the user according to an embodiment of the disclosure;
FIG. 10A is a back view of an electronic device when worn by the user according to an embodiment of the disclosure;
FIG. 10B is a back view of the electronic device when not worn by the user, and showing an iris cover for blocking light through lenses according to an embodiment of the disclosure;
FIG. 10C is an illustration showing blocking of the light passing through lenses using an optical member in an electronic device when not worn by the user according to an embodiment of the disclosure;
FIG. 11 is a flowchart of an operating method of an electronic device according to an embodiment of the disclosure;
FIG. 12 is a detailed flowchart of controlling an optical member in a second state according to one embodiment of the disclosure; and
FIG. 13 is a detailed flowchart of controlling an optical member in a second state according to another embodiment of the disclosure.

Throughout the drawings, like reference numerals will be understood to refer to like parts, components and structures.

### DETAILED DESCRIPTION

Hereinafter, various embodiments of the disclosure are described with reference to the accompanying drawings. However, it should be understood that it is not to limit the technique disclosed in the disclosure to particular forms, and but to cover various modifications, equivalents, and/or alternatives of various embodiments of the disclosure.

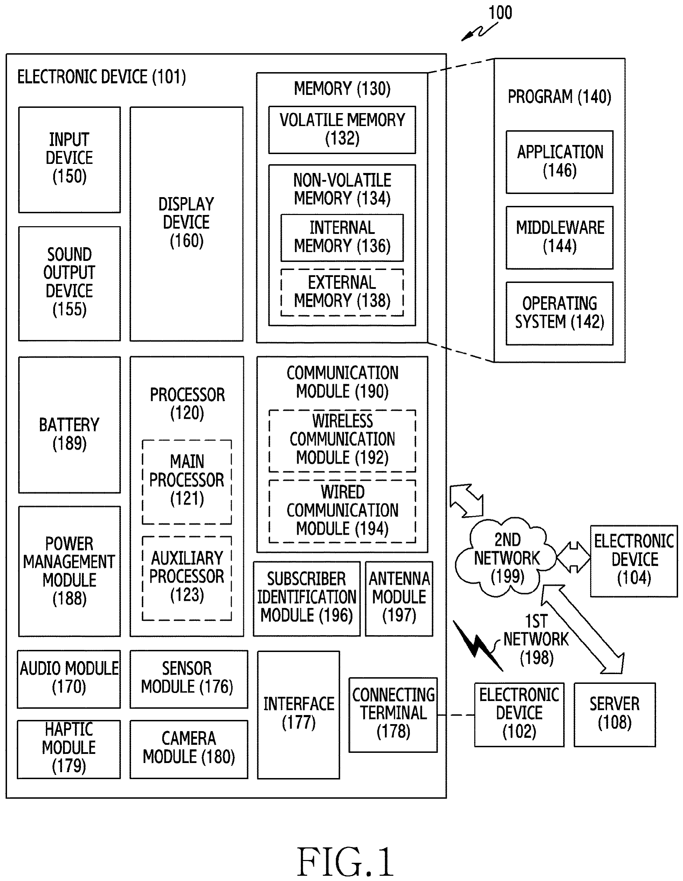

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, or a keyboard.

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include one or more antennas, and, therefrom, at least one antenna appropriate for a communication scheme used in the communication network, such as the first network 198 or the second network 199, may be selected, for example, by the communication module 190 (e.g., the wireless communication module 192). The signal or the power may then be transmitted or received between the communication module 190 and the external electronic device via the selected at least one antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

The electronic device according to certain embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the disclosure to particular embodiments but include various changes, equivalents, or alternatives for a corresponding embodiment. With regard to the description of the accompanying drawings, similar reference numerals may be used to refer to similar or related elements. It is to be understood that a singular form of a noun corresponding to an item may include one or more of the item, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of, the items enumerated together in a corresponding one of the phrases. As used herein, such terms as "1st," "2nd," "first," and "second" may be used to simply distinguish a corresponding component from another component, but is not intended to limit the components in other aspect (e.g., importance or order). It is to be understood that if an element (e.g., a first element) is referred to, with or without the term "operatively" or "communicatively", as "coupled" or "connected" to or with another element (e.g., a second element), it indicates that the element may be coupled with the other element directly (e.g., wiredly), wirelessly, or via a third element.

As used herein, the term "module" may include a unit implemented in hardware, software, or firmware, and may be used interchangeably with other terms, for example, "logic," "logic block," "part," or "circuitry." A module may be a single integral component, or a minimum unit or part thereof, adapted to perform one or more functions. For example, according to one embodiment, a module may be implemented in a form of an application-specific integrated circuit (ASIC).

Certain embodiments of the disclosure may be implemented as software (e.g., the program 140) including one or more instructions that are stored in a storage medium (e.g., the internal memory 136 or external the memory 138) which is readable by a machine (e.g., the electronic device 101). For example, a processor (e.g., the processor 120) of the machine (e.g., the electronic device 101) may invoke and execute at least one of the one or more instructions stored in the storage medium, with or without using one or more other components. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. The term "non-transitory" indicates that the storage medium is a tangible device, but does not include a signal (e.g., an electromagnetic wave). However, this term does not differentiate between where data is semi-permanently stored in the storage medium and where the data is temporarily stored in the storage medium.

According to one embodiment, a method of the disclosure may be included and provided in a computer program product. The computer program product may be traded as a product between a seller and a buyer. The computer program product may be distributed in the form of a non-transitory machine-readable storage medium (e.g., a compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the non-transitory machine-readable storage medium, such as memory of the manufacturer's server, a server of the application store, or a relay server.

According to certain embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by a module, a program, or another component may be carried out sequentially, in parallel, repeatedly, or heuristically, or one or more of the operations may be executed in a different order or omitted, or one or more other operations may be added.

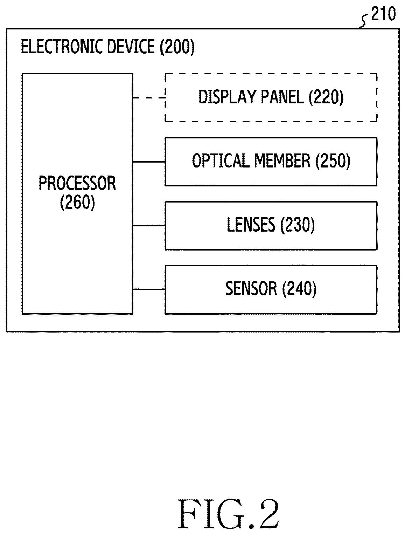

FIG. 2 is a block diagram of an electronic device 200 (e.g., the electronic device 101 or the electronic device 102 of FIG. 1) according to an embodiment.

Referring to FIG. 2, the electronic device 200 according to an embodiment may include at least one of a housing 210, a display panel 220, one or more lenses 230, a sensor 240, an optical member 250, or a processor 260. According to one embodiment, the electronic device 200 may include the display panel 220. According to another embodiment, an external electronic device including the display panel 220 may be mounted in the electronic device 200.

According to an embodiment, the electronic device 200 may be a wearable electronic device worn by a user. For example, the electronic device 200 may include a head mount device (HMD) worn on the user's head. According to an embodiment, the electronic device 200 may provide realistic content (i.e. virtual reality (VR) or augmented reality (AR) content) to the user. According to one embodiment, the electronic device 200 may be functionally connected with the external electronic device (e.g., the electronic device 101 or the electronic device 102 of FIG. 1). For example, the electronic device 200 may be functionally connected with the external electronic device wirelessly by radio or by cable using short-range communication protocols (e.g., WiFi, Bluetooth, Zigbee or near field communication (NFC)). Hence, the electronic device 200 may output data received from the external electronic device.

According to an embodiment, the housing 210 may accommodate and fix in place at least one of the display panel 220, the one or more lenses 230, the sensor 240, the optical member 250, or the processor 260. For example, the housing 210 may be formed in a wearable shape for the user. According to an embodiment, the housing 210 may include a first surface and a second surface which face the user who wears the electronic device 200.

According to an embodiment, the display panel 220 may be disposed between the first surface and the second surface of the housing 210. For example, the display panel 220 may be mounted in the first surface of the housing 210, to be interposed between the first surface and the second surface of the housing 210. According to one embodiment, if the electronic device 200 includes the display panel 220, the display panel 220 may be secured on the first surface of the housing 210. According to another embodiment, if the external electronic device includes the display panel 220 and the external electronic device is mounted in the electronic device 200, the display panel 220 may be interposed between the first surface and the second surface of the housing 210.

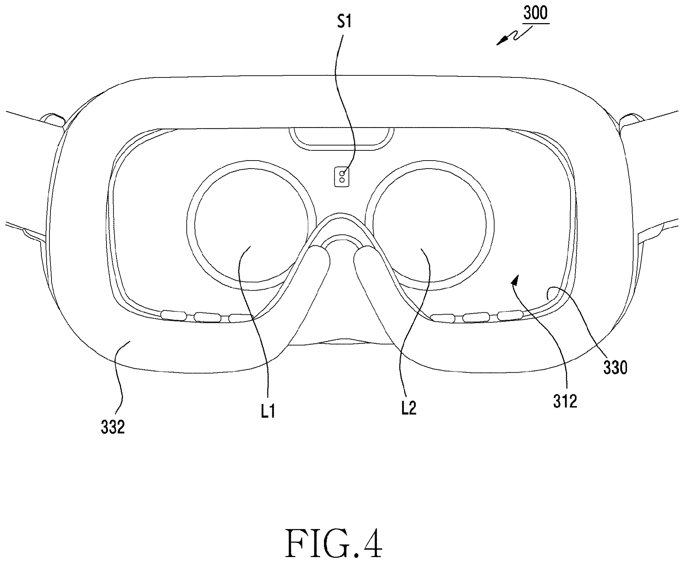

According to an embodiment, the lenses 230 may be interposed between the first surface and the second surface of the housing 210. For example, the lenses 230 may be interposed between the second surface of the housing 210 and the display panel 220. Accordingly, if the electronic device 200 is worn by the user in which the second surface of the housing 210 is in contact with the user, the user may watch the display panel 220 through the lenses 230. The lenses 230 may include lenses L1 and L2, as shown in FIG. 4.

According to an embodiment, the sensor 240 may detect the user's wearing of the electronic device 200. For doing so, the sensor 240 may be disposed on the second surface of the housing 210. For example, the sensor 240 may include at least one of a proximity sensor, an illumination sensor, a biometric sensor, a temperature sensor or a pressure sensor.

According to an embodiment, the optical member 250 may control the amount of external light incident to the lenses 230 from the outside of the electronic device 200. One or more characteristics of the optical member 250 may be adjusted to control the external light incident to the lenses 230. For example, the external light incident to the lenses 230 may be controlled by changing as at least one of the permeation rate or the scattering rate of the optical member 250. To this end, the optical member 250 may be interposed between the display panel 220 and the lenses 230. The lenses L1 and L2 may be interposed between the second surface 310b of the housing and the display panel 220.

According to an embodiment, the processor 260 may control the optical member 250. The processor 260 may control the optical member 250, based on whether or not the user wears the electronic device 200. While the electronic device 200 is worn on the user, the processor 260 may control the optical member 250 to be in a first state. When in the first state, the external light incident through the lenses L1 and L2 may be concentrated on the display panel at a designated rate. For example, the processor 260 may increase the permeation rate of the optical member 250, or decrease the scattering rate of the optical member 250. While the electronic device 200 is not worn on the user, the processor 260 may control the optical member 250 to be in a second state. Thus, the processor 260 may reduce the concentration of the external light incident through the lenses on the display panel. For example, the processor 260 may decrease the permeation rate of the optical member 250, or increase the scattering rate of the optical member 250. The processor 260 may include a microprocessor or any suitable type of processing circuitry, such as one or more general-purpose processors (e.g., ARM-based processors), a Digital Signal Processor (DSP), a Programmable Logic Device (PLD), an Application-Specific Integrated Circuit (ASIC), a Field-Programmable Gate Array (FPGA), a Graphical Processing Unit (GPU), a video card controller, etc. In addition, it would be recognized that when a general purpose computer accesses code for implementing the processing shown herein, the execution of the code transforms the general purpose computer into a special purpose computer for executing the processing shown herein. Certain of the functions and steps provided in the Figures may be implemented in hardware, software or a combination of both and may be performed in whole or in part within the programmed instructions of a computer. No claim element herein is to be construed under the provisions of 35 U.S.C. §112(f), unless the element is expressly recited using the phrase "means for." In addition, an artisan understands and appreciates that a "processor" or "microprocessor" may be hardware in the claimed disclosure. Under the broadest reasonable interpretation, the appended claims are statutory subject matter in compliance with 35 U.S.C. §101.

According to an embodiment, the processor 260 may control the optical member 250 to be in the first state so that light passing through the optical member 250 increases. For example, after identifying that the user is wearing the device using the sensor 240, the processor 260 may increase the permeation rate of the optical member 250 or decrease the scattering rate, so that more light outputted from the display is transmitted toward the lenses through the optical member 250.

According to an embodiment, the processor 260 may control the optical member 250 to be in the second state so that light passing through the optical member 250 decreases. For example, after identifying that the user is not wearing the device using the sensor 240, the processor 260 may decrease the permeation rate of the optical member 250 or increase the scattering rate, so that the concentration of the external light incident through the lenses 230 on the display panel is reduced.

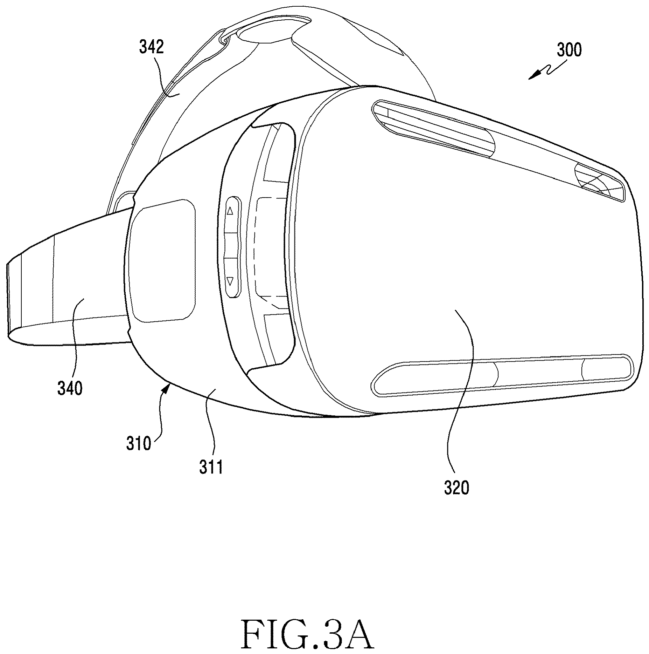

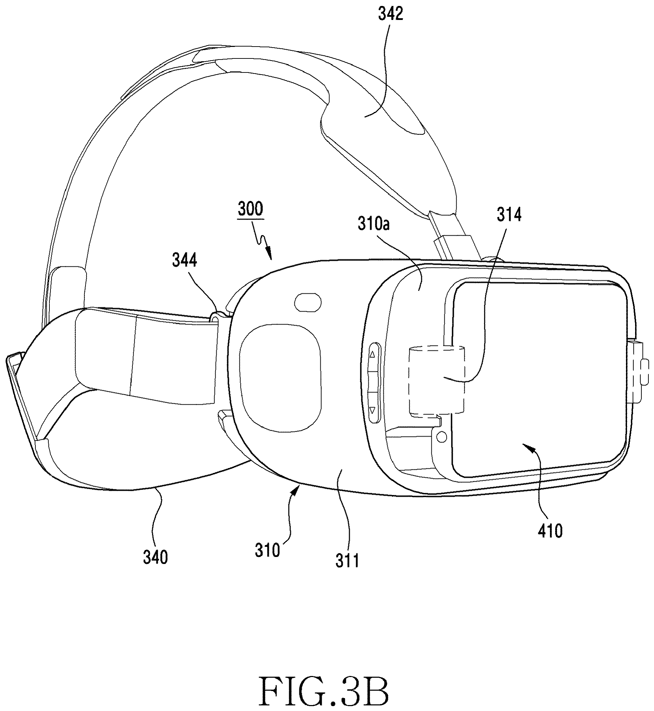

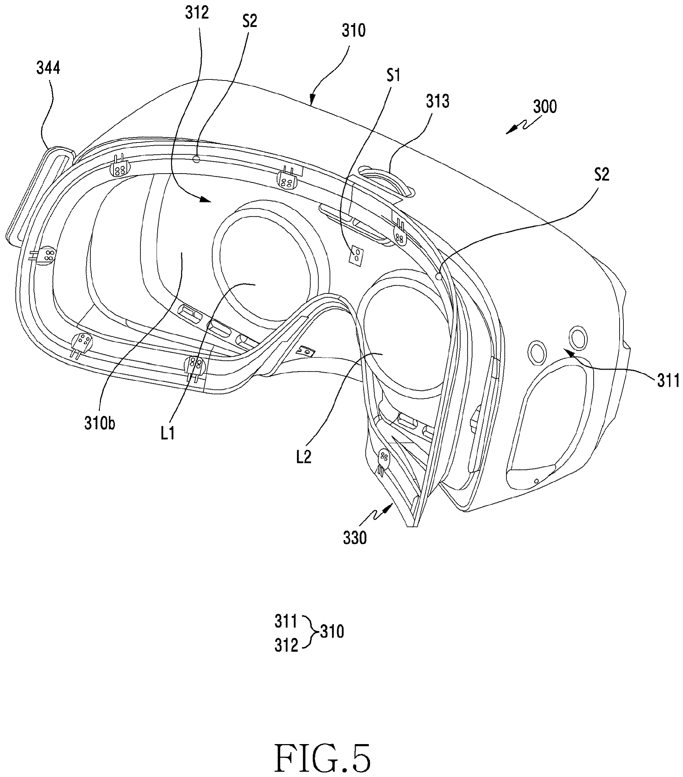

FIGs. 3A and FIG. 3B are perspective views of the exterior of an electronic device according to an embodiment. FIG. 4 is a front view of a part of the exterior of an electronic device according to an embodiment. FIG. 5 is a perspective view of an electronic device without a head band and a mounting portion according to an embodiment.

Referring to FIGs. 3A through FIG. 5, an electronic device 300 according to an embodiment may be the same electronic device, at least in part, as the electronic device 101 of FIG. 1. The electronic device 300 according to an embodiment may be a wearable electronic device worn on a body, and may be, for example, an HMD.

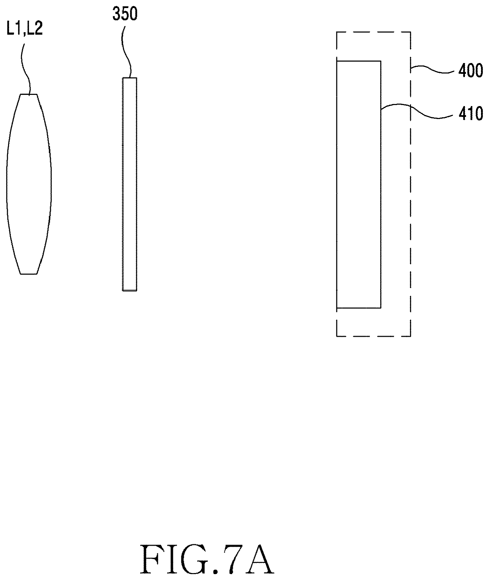

According to an embodiment, the electronic device 300 may provide the user with VR or AR content or images through a display panel (e.g., a display panel 410 of FIG. 7A). According to one embodiment, the electronic device 300 may be functionally connected with an external electronic device 400 shown in FIG. 7A. For example, the electronic device 300 may be functionally connected with the external electronic device wirelessly by radio or by cable using short-range communication protocols (e.g., WiFi, Bluetooth, Zigbee or NFC), to thus output data received from the external electronic device 400.

According to an embodiment, the electronic device 300 may include the display panel (e.g., the display panel 410 of FIG. 7A). The display panel 410 may be coupled with or secured to the housing 310. The display panel 410 may be interposed between first and second surfaces 310a and 310b of the housing 310.

The electronic device 300 may be configured to house the external electronic device 400 (e.g., the electronic device 101 or the electronic device 102 or an external electronic device 400 of FIG. 7A) that includes the display panel 410. For example, the external electronic device 400 may be attached to and detached from the housing 310 using a detachable device 314.

According to one embodiment, the electronic device 300 may include the housing 310 and a cover 320 which substantially form an exterior surface of the electronic device 300, and a face supporting member 330 disposed on the other surface away from the cover 320 of the housing 310.

According to an embodiment, the housing 310 may include first and second housings 311 and 312. For example, the first housing 311 may be an external housing of the electronic device 300, and the second housing 312 may be an internal housing of the electronic device 300. The first housing 311 may be the external housing which forms the exterior of the electronic device 300, and the second housing 312 may be a support structure for supporting parts mounted in the electronic device 300.

According to one embodiment, the housing 310 may include the first housing 311 for securing the display panel 410, and the second housing 312 for supporting a pair of lens elements, for example, optical lenses L1 and L2. For example, the first housing 311 may accommodate the secured display panel 410, and the second housing 312 may accommodate the optical lenses L1 and L2. In addition, another internal housing (not shown) may include a support structure for supporting a battery (not shown), a main printed circuit board (not shown), etc.

According to an embodiment, the housing 310 may include the first surface 310a at the front of the electronic device 300, and include the second surface 310b at the back of the electronic device 300. The one or more optical lenses L1 and L2 and an optical member 350 may be interposed between the first and second surfaces 310a and 310b. For example, the one or more optical lenses L1 and L2 may be disposed in the second surface 310b, or in part of the second housing 312 of the second surface 310b.

According to one embodiment, the housing 310 may include the first surface 310a for securing the portable electronic device 400 which includes its own display panel 410 shown in FIG. 7A. The first surface 310a of the housing 310 may include a plate or a cover structure, and the second surface 310b may include a wearing surface or a contacting surface structure. Accordingly, the first surface 310a may secure the display panel or hold the portable electronic device 300. If the electronic device 300 is worn on the head, the second surface 310b may contact or press areas near user's eyes, or may support or face the user's face.

According to an embodiment, the electronic device 300 may include the display panel 410. The housing 310 may include the display panel 410 shown in FIG. 7A on the first surface 310a. The second surface 310b may include the wearing surface or the contacting surface structure. Accordingly, the first surface 310a may secure the display panel. If the electronic device 300 is worn on the head, the second surface 310b may contact or press the areas near the user's eyes, or may support or face the user's face.

As explained above, the first housing 311 may be the part of the housing 310 for securing the display panel 410. The second surface 310b of the housing 310 may include a wearing portion 332 for contacting the skin of the user who wears the electronic device 300, and a face supporting member 330 for elastically supporting the wearing portion 332. The wearing portion 332 for the head mounting may be formed of a soft material having elasticity, for example, sponge, and the face supporting member 330 may be formed of an injection material for elastically supporting the wearing portion 332 and supporting the face, for example, a rubber material or a soft plastic material. According to one embodiment, the face supporting member 330 may include a deformable material (e.g., rubber, urethane or silicon material) to adapt to user's facial curves.

According to one embodiment, the cover 320 may be detachable from the first surface 310a of the housing 310. The cover 320 may be formed of a transparent or translucent material. The cover 320 may be detachable from the first surface 310a of the housing 310, and may protect the display panel 410 secured on the first surface 310a of the housing 310.

According to one embodiment, the electronic device 300 may include a first band 340 (e.g., a rubber band) mounted at one end of the housing 310, and a second band 342 (e.g., a rubber band) connected to the first band 340 for tightly securing the electronic device 300 to the head of the user. Thus, the electronic device 300 may be securely on the head by the first and second bands 340 and 342. A connecting member 344 may connect the band to the housing 310 of the electronic device 300.

According to one embodiment, the electronic device 300 may include at least one speaker device (not shown), to output sound data received from the external electronic device. According to an embodiment, the electronic device 300 may output data directly itself or provide the data to the external electronic device. According to one embodiment, the electronic device 300 may include at least one microphone device (not shown), to collect sound data. The sound data may then be provided to the external electronic device 400. According to one embodiment, the electronic device 300 may include at least one camera device (not shown) to capture images. The images may be displayed through the display (e.g., the display panel 410 of FIG. 7A), or may be provided to the external electronic device.

As explained above, the electronic device 300 may include the first housing 311 of the housing 310, which forms the exterior. According to one embodiment, the second housing 312 may support the pair of the optical lenses L1 and L2 disposed at one side. The user may wear the electronic device 300 on his/her head, and then watch images outputted on the display panel (e.g., the display panel 410 of FIG. 7A) through the pair of the optical lenses L1 and L2.

According to an embodiment, the electronic device 300 may protect the display panel (e.g., the display panel 410 of FIG. 7A) from external light by detecting using a sensor whether the user wears the electronic device 300, and blocking, scattering, or diffusing the light passing through the optical lenses L1 and L2 by using the optical member 350.

According to an embodiment, sensors S1 and S2 detect whether or not the user is wearing the electronic device 300, and may be mounted in various portions of the housing 310.

According to an embodiment, one or more sensors S1 and S2 may be disposed on the face supporting member 330 of the housing 310, and one or more sensors S1 and S2 may be disposed on the second housing 312 which supports the pair of the optical lenses L1 and L2. Although only one sensor S2 is shown in FIG. 5 as being mounted on the face supporting member 330, a plurality of sensors may be mounted along the face supporting member 330.

According to an embodiment, if the sensor S1 is mounted on the second housing 312, it may be disposed in part of the second housing 312 between the convex lenses L1 and L2. For example, the sensor S1 may include at least one of a proximity, an illumination sensor, a pressure sensor, a biometric sensor, or a temperature sensor. However, the sensor S1 is not limited to this particular area of the second housing 312, and may be disposed in other parts of the housing 310.

According to an embodiment, the sensor S2 mounted on the face supporting member 330 may be, for example, a pressure sensor.

The sensors S1 and S2 may be electrically coupled to a printed circuit board (not shown) using flexible circuits. A control knob 313 may adjust focus of the lenses L1 and L2.

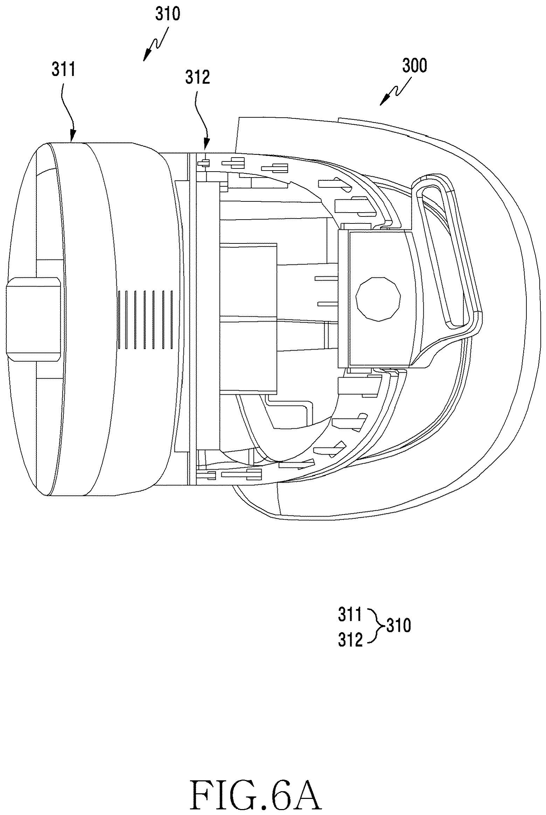

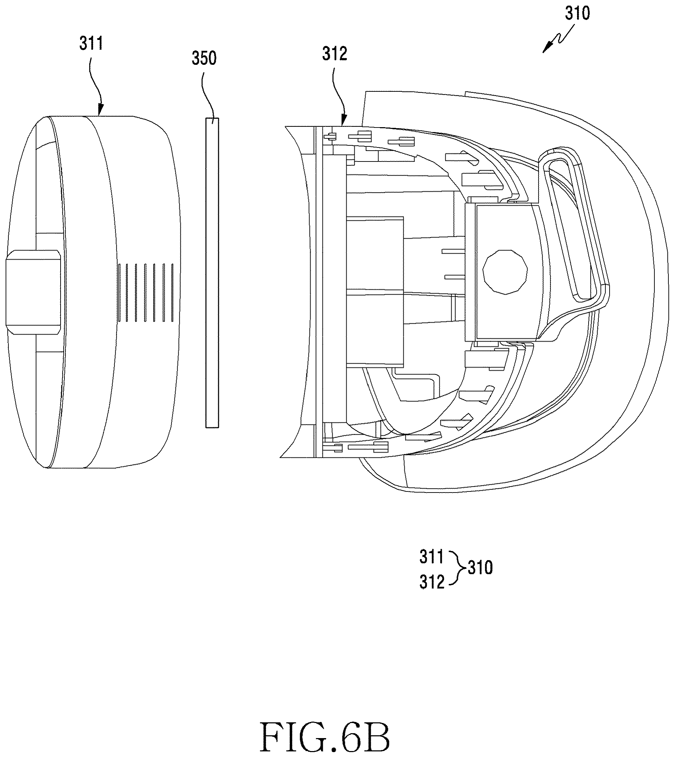

FIG. 6A is a side view in which part of a first housing 311 is separated from the rest of the housing to show an optical member that is disposed in a second housing 312 according to an embodiment of the disclosure. FIG. 6B is a side view of the optical member coupled to the housing according to an embodiment of the disclosure.

Referring to FIG. 6A and FIG. 6B, a housing 310 of an electronic device 300 according to an embodiment may include an optical member 350 disposed in the second housing 312. In addition, a pair of optical lenses (e.g., the optical lenses L1 and L2 of FIG. 5) may be disposed in the second housing 312, and a display panel (e.g., the display panel 410 of FIG. 3B) may be disposed in the first housing 311.

If the electronic device 300 is not worn, the optical member 350 may prevent (e.g., scatter, block, reduce light permeation) light passing through the optical lenses from concentrating on the display panel of the first housing 311. Optical characteristics of the optical member 350 may be changed by applying voltage and/or current to the optical member 350. Thus, the optical member may prevent heating or burning of the display panel.

Now, dispositions and operations of the optical member according to one embodiment of the disclosure are described by referring to the remaining drawings.

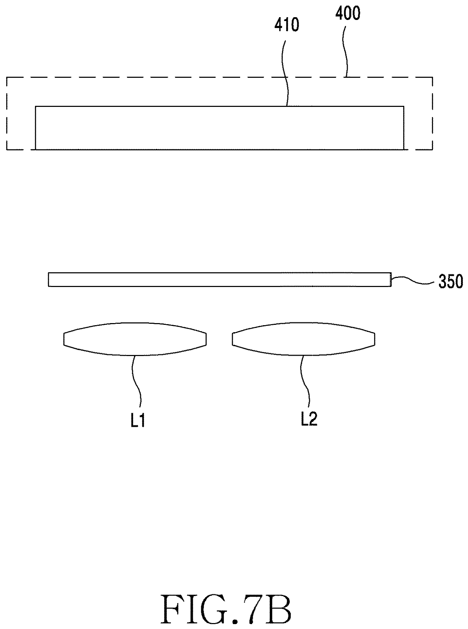

FIG. 7A is a side view of an optical member according to an embodiment of the disclosure. FIG. 7B is a plan view of the optical member according to an embodiment of the disclosure.

Referring to FIGs. 7A and FIG. 7B, an electronic device (e.g., the electronic device 300 of FIG. 2 through FIG. 5) according to an embodiment may include an optical member 350 interposed between optical lenses L1 and L2 and a display panel 410.

The display panel 410 according to an embodiment may be independently mounted in a housing (e.g., the housing 310 of FIG. 2 through FIG. 5) to face the optical lenses L1 and L2, and may be disposed in an external electronic device 400 that in turn is mounted in a first housing (e.g., the first housing 311 of FIG. 2 through FIG. 5) to face the optical lenses L1 and L2.

The display panel 410 may have a flat plane shape or a curved shape. The display panel 410 may be formed of a rigid material or a flexible material. If the display panel 410 is formed of the flexible material, the display panel may be originally flat but may be bent to fit into the housing.

The optical member 350 according to an embodiment may be mounted on a support structure of a second housing of the electronic device. The optical member 350 may diffuse light from the outside passing through the optical lenses L1 and L2 to not concentrate on the display panel 410, reduce the permeation of the light passing through the optical lenses L1 and L2 to not reach the display panel 410, or block the light passing through the optical lenses L1 and L2.

According to an embodiment, the optical member 350 may be a film whose characteristics may be electrically altered. For example, the optical member 350 may diffuse or block light depending on whether voltage or current is applied. In another embodiment, the permeation rate of light through the optical member 350 may be altered by electrical current or voltage. For example, light below a designated amount may pass in a first state in which voltage or current is applied to the optical member 350, and light over the designated amount may pass in a second state in which the voltage or the current is not applied to the optical member 350. The optical member 350 may operate as a translucent or opaque member (e.g., the user is not able to view images outputted on the display) in the first state, and may operate as a transparent member (e.g., the user is able to view images outputted on the display) in the second state.

If the electronic device (e.g., the electronic device 300 of FIG. 2 through FIG. 5) is worn, the optical member 350 may be in the second state with no voltage or current applied to the optical member 350, and the user may watch content displayed on the display panel 410 through the optical lenses L1 and L2.

If the electronic device is not worn for a predetermined time period, the optical member 350 may be configured to be in the first state with the voltage or the current applied, and external light passing through the optical lenses L1 and L2 may be dispersed or scattered by the optical member 350. Thus, the amount of light passing through the optical lenses L1 and L2 and reaching the display panel 410 may be reduced.

According to an embodiment, the optical member 350 may be interposed between the optical lenses L1 and L2 and the display panel 410. The optical member 350 may be disposed substantially to face the optical lenses L1 and L2, and substantially to face the display panel 410. The optical member 350 may output the light coming from the optical lenses L1 and L2, to the display panel 410. Alternatively, the optical member 350 may output the light coming from the display panel 410, to the optical lenses L1 and L2.

According to an embodiment, the optical member 350 may be disposed closer to the optical lenses L1 and L2 than the display panel 410.

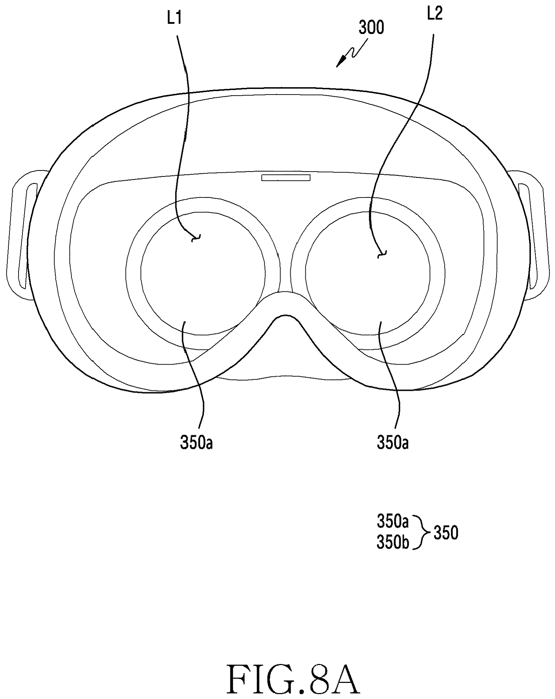

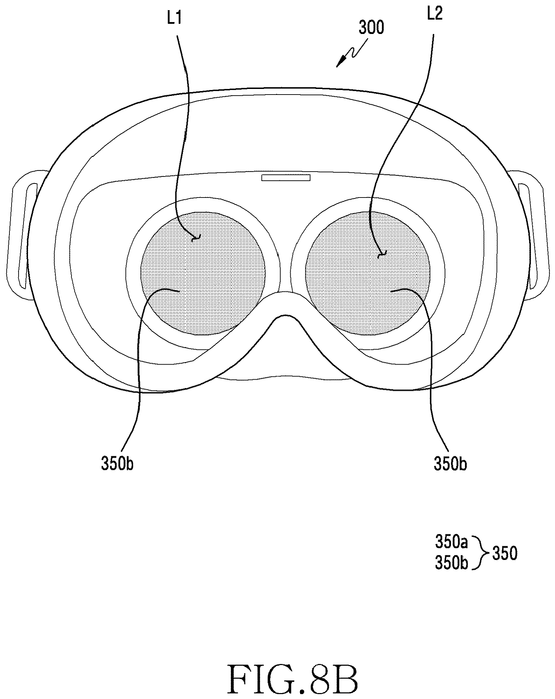

FIG. 8A is a back view of an electronic device when worn by the user according to an embodiment of the disclosure. FIG. 8B is a back view of the electronic device when not worn by the user according to an embodiment of the disclosure.

Referring to FIG. 8A, if the user is wearing the electronic device 300, a processor (e.g., the processor 120 or FIG. 1 or the processor 260 of FIG. 2) of the electronic device 300 may control an optical member 350 to pass the light over a designated amount. For example, the optical member 350a may operate substantially as a transparent member to achieve the light permeation rate over a designated range, as shown in FIG. 8A.

Referring to FIG. 8B, if the user is not wearing the electronic device 300, the processor (e.g., the processor 120 or FIG. 1 or the processor 260 of FIG. 2) of the electronic device 300 may control the optical member 350 to transmit the light below the designated amount to a display panel 410. For example, the optical member 350b may operate as an opaque member to scatter the light or to achieve the light permeation rate below the designated range, as shown in FIG. 8B. The light passing through the optical member 350b may be spread (e.g., scattered), to minimize the amount of the light reaching the display panel 410. Referring to FIGs. 8A-8B, the transparent optical member to which no voltage or no current is applied is referred to as the optical member 350a, and the translucent or opaque optical member to which the voltage or the current is applied is referred to as the optical member 350b.

Alternatively, the optical member 350a may achieve the necessary transparency when a first voltage or current is applied to the optical member, and the optical member 350b may achieve the necessary opaqueness when a second first voltage or current is applied to the optical member.

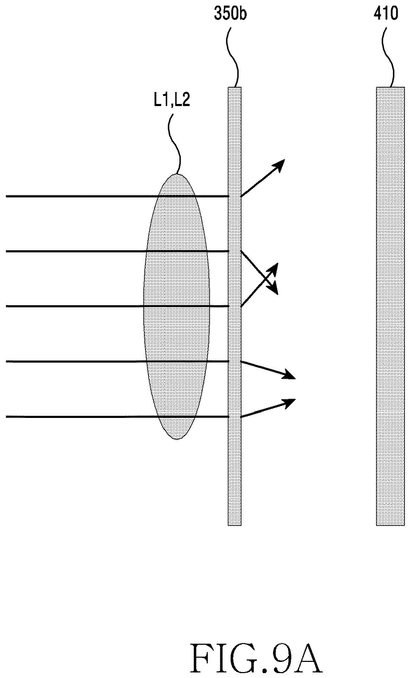

FIG. 9A is an illustration showing light passing through an optical member 350b is diffused or scattered in an electronic device that is not worn by the user according to an embodiment of the disclosure.

Referring to FIG. 9A, if sensor S1 and S2 (e.g., the sensor 240 of FIG. 2) detect that the electronic device has not been worn for a predetermined time period, a processor (e.g., the processor 120 or FIG. 1 or the processor 260 of FIG. 2) may switch the transparent optical member 350a of FIG. 8A to the opaque optical member 350b. If the optical member 350b is opaque, the light passing through the optical lens may be diffused (e.g., scattered) by the optical member 350b, and thus may not reach the display panel 410, thereby minimizing the amount of light reaching the display panel 410.

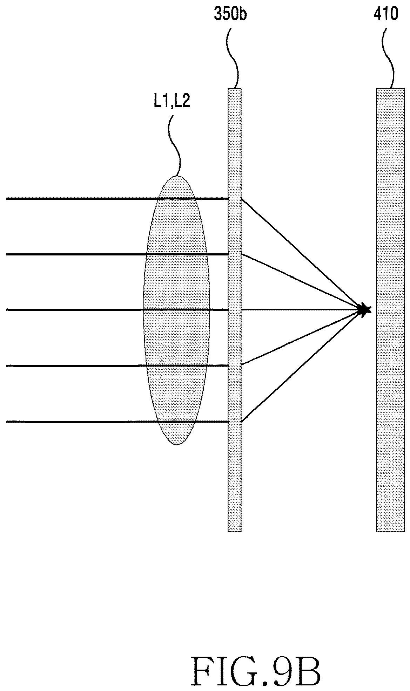

FIG. 9B is an illustration showing light passing through the optical member 350b in the electronic device that is worn by the user according to an embodiment of the disclosure.

Referring to FIG. 9A, if the sensors S1 and S2 detect that the electronic device is not worn for a predetermined time period, the processor (e.g., the processor 120 or FIG. 1 or the processor 260 of FIG. 2) may switch the transparent optical member 350a of FIG. 8A to the translucent or opaque optical member 350b. If the optical member is the translucent or opaque optical member 350b, the light passing through the optical lenses L1 and L2 and reaching the display panel 410 may be decreased because the permeation rate of the optical member 350b is decreased.

When the optical member 350 is transparent, i.e. when the electronic device is worn, light passing through the optical lenses L1 and L2 and reaching the display panel 410 exhibits high permeation rate (e.g., in or above a range of 70 ∼ 90 %). But when the optical member 350 is translucent or opaque, i.e. when the electronic device is not worn, the permeation rate of the light passing through the optical lenses L1 and L2 and reaching the display panel 410 may be lowered (e.g., to a range of 10 ∼ 30 %). The permeation rate of the optical member 350 may adjusted according to an applied voltage or current.

If the sensor S1 and/or S2 identifies the user is wearing the electronic device, as shown in FIG. 9B, the permeation rate of the optical member 350 may be increased to transmit the light incident through the lenses L1 and L2. However, as shown in FIG. 9A, if the sensor S1 and/or S2 identifies that the user is not wearing the electronic device, the external light transmitted to the display panel 410 through the lenses may be reduced in quantity.

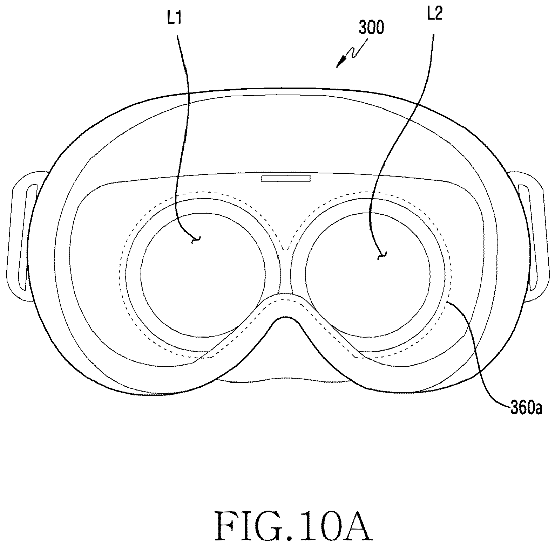

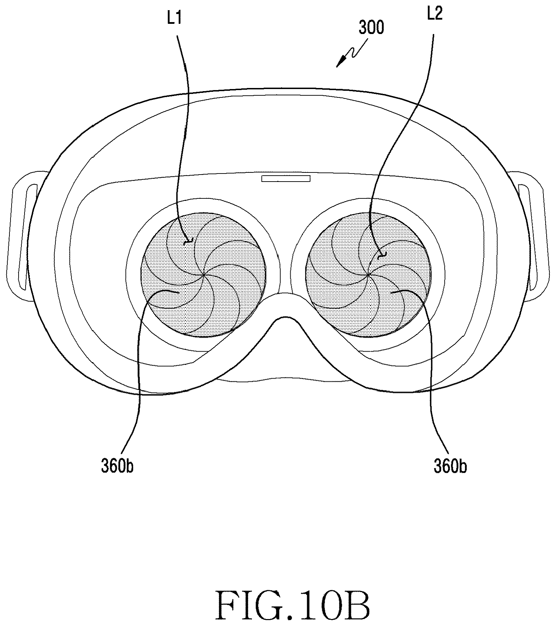

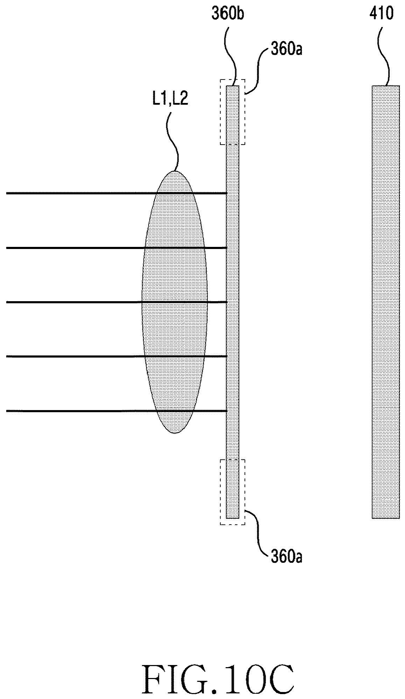

FIG. 10A is a back view of an electronic device when worn by the user according to an embodiment of the disclosure. FIG. 10B is a back view of the electronic device when not worn by the user, and showing an iris cover for blocking light passing through lenses according to an embodiment of the disclosure. FIG. 10C is an illustration showing blocking of the light passing through the optical lenses using an optical member in an electronic device when not worn by the user according to an embodiment of the disclosure.

Referring to FIG. 10A, FIG. 10B, and FIG. 10C, an optical member 360a according to an embodiment may be configured as an iris cover. The optical member 360a mounted in the electronic device (e.g., the electronic device 300 of FIG. 3A through FIG. 5) according to an embodiment may be driven and folded by a driving unit (not shown) if the electronic device is worn, so that it does not interrupt the optical path between optical lenses L1 and L2 and a display panel 410 as shown in FIG. 10A.

An optical member 360b mounted in the electronic device (e.g., the electronic device 300 of FIG. 3A through FIG. 5) according to an embodiment may be unfolded by the driving unit (not shown) if the electronic device is not worn for a predetermined time period, so that it may be disposed to interrupt the optical path between the optical lenses L1 and L2 and the display panel 410. Hence, the optical member 360b may block the light passing through the optical lenses L1 and L2 as shown in FIG. 10C and protect the display panel 410 from the light passing through the optical lenses L1 and L2.

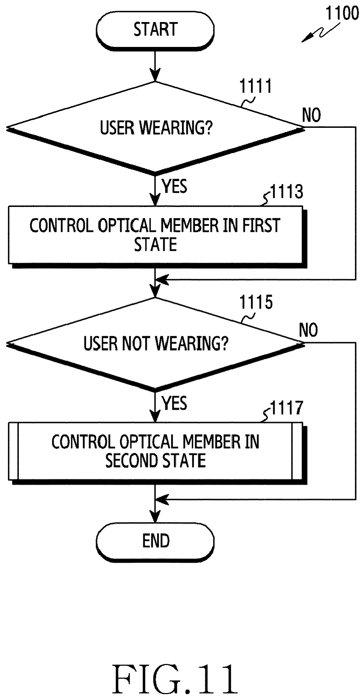

FIG. 11 is a flowchart 1100 of an operating method of an electronic device (e.g., the electronic device 300 of FIG. 2) according to an embodiment.

Referring to FIG. 11, the electronic device 300 according to an embodiment may identify that the users is wearing the electronic device 300 in operation 1111. According to an embodiment, a processor (e.g., the processor 260 of FIG. 2) may identify that the users is wearing the electronic device 300 by using a sensor module (e.g., the sensor 240 of FIG. 2). According to one embodiment, if the user wears the electronic device 300 and is in contact or in proximity to a second surface of a housing (e.g., the housing 310 of FIG. 2), the processor 260 may identify that the user is wearing the electronic device 300. The sensor 240 may include at least one of a proximity sensor, an illumination sensor, a biometric sensor, a temperature sensor or a pressure sensor.

According to an embodiment, if the user is identified as wearing the device in operation 1111, the electronic device 300 may control an optical member (e.g., the optical member 350 of FIG. 2) to be in the first state in operation 1113. According to an embodiment, in the first state, external light incident through the lenses from outside of the electronic device 300 may be concentrated on the display panel at over a designated rate. For example, the processor 260 may control the optical member 350 to be in the first state as shown in FIG. 8A or FIG. 10A.

According to one embodiment, if the optical member 350 is in a second state, the processor 260 may switch the optical member 350 to the first state. For example, the processor 260 may increase the permeation rate of the optical member 350, to increase the external light transmitted to the display panel. For example, the processor 260 may decrease the scattering rate of the optical member 350, to concentrate the external light passing through the optical member 350 on the display panel without scattering. For doing so, the processor 260 may apply the current of a designated level to the optical member 350.

According to another embodiment, if the optical member 350 is in the first state, the processor 260 may maintain the optical member 250 in the first state. For example, the processor 260 may maintain the permeation rate of the optical member 250, to maintain the amount of the external light transmitted to the display panel. In another example, the processor 260 may maintain the scattering rate of the optical member 350, to concentrate the external light passing through the optical member 350 on the display panel without scattering. In doing so, the processor 260 may maintain the current of the designated level applied to the optical member 350.

According to an embodiment, while controlling the optical member 350 in the first state in operation 1113, the electronic device 300 may identify that the user is no longer wearing the electronic device 300, in operation 1115. According to an embodiment, the processor 260 may identify that the user is not wearing the electronic device 300 by using the sensor 240. According to one embodiment, if the user takes off the electronic device 300 and is not in contact or in proximity to the second surface of the housing 310, the processor 260 may identify that the user is not wearing the device.

According to an embodiment, if the user is identified as not wearing the device in operation 1115, the electronic device 300 may control the optical member 350 to be in a second state in operation 1117. According to an embodiment, the processor 260 controls the optical member 350 to be in the second state so that the external light concentrated on the display panel falls below the designated rate. For example, the processor 260 may control the optical member 350 in the second state as shown in FIG. 8B or FIG. 10B. Thus, the processor 260 may reduce the concentration of the external light on the display panel. According to one embodiment, the processor 260 may control the optical member 350 to be in the second state, based on the period of time in which the user is not wearing the electronic device 300. According to another embodiment, the processor 260 may control the optical member 350 to be in the second state, based on the ambient illumination surrounding the electronic device 300.

According to one embodiment, if the optical member 350 is in the first state, the processor 260 may switch the optical member 350 to the second state. For example, the processor 260 may decrease the permeation rate of the optical member 350, to reduce the external light transmitted to the display panel. In another example, the processor 260 may increase the scattering rate of the optical member 350, to scatter the external light passing through the optical member 350. For doing so, the processor 260 may decrease the current applied to the optical member 350 to fall below a designated level. For example, the processor 260 may block the current applied to the optical member 350.

According to another embodiment, if the optical member 350 is in the second state, the processor 260 may maintain the optical member 350 in the second state. For example, the processor 260 may maintain the permeation rate of the optical member 350, to maintain the external light amount transmitted to the display panel. For example, the processor 260 may maintain the scattering rate of the optical member 350, to scatter the external light passing through the optical member 350. For doing so, the processor 260 may maintain the current applied to the optical member 350 below the designated level. For example, the processor 260 may keep blocking the current applied to the optical member 350.

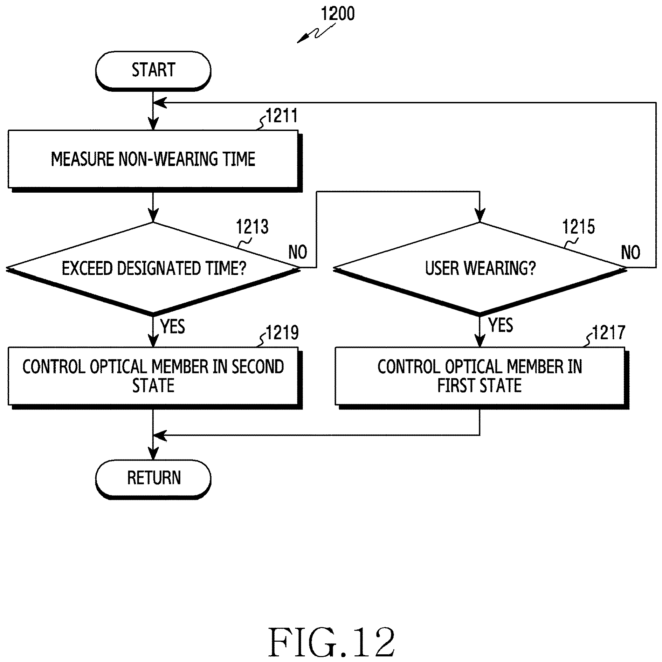

FIG. 12 is a detailed flowchart 1200 of operation 1117 for controlling an optical member 350 in a second state according to one embodiment.

Referring to FIG. 12, an electronic device 300 according to one embodiment may measure the time period in which the user is not wearing the electronic device 300 in operation 1211. According to one embodiment, after identifying that the user is not wearing the electronic device 300, the processor 260 may start measuring the non-wearing time.

According to one embodiment, as part of measuring the non-wearing time in operation 1211, the electronic device 101 or 300 may compare the non-wearing time with a designated time in operation 1213. According to one embodiment, the processor 260 may determine whether the non-wearing time exceeds the designated time. According to one embodiment, if the non-wearing time does not exceed the designated time in operation 1213 and the user is not identified as wearing the electronic device 300 in operation 1215, the electronic device 300 may return to operation 1211.

According to one embodiment, if the non-wearing time does not exceed the designated time in operation 1213 and the user is identified as wearing the electronic device 300 in operation 1215, the electronic device 300 may control the optical member 350 to be in the first state in operation 1217. For example, the processor 260 may maintain the optical member 350 in the first state.

According to one embodiment, if the non-wearing time exceeds the designated time in operation 1213, the electronic device 300 may control the optical member 350 to be in the second state in operation 1219. For example, the processor 260 may switch the optical member 350 from the first state to the second state.

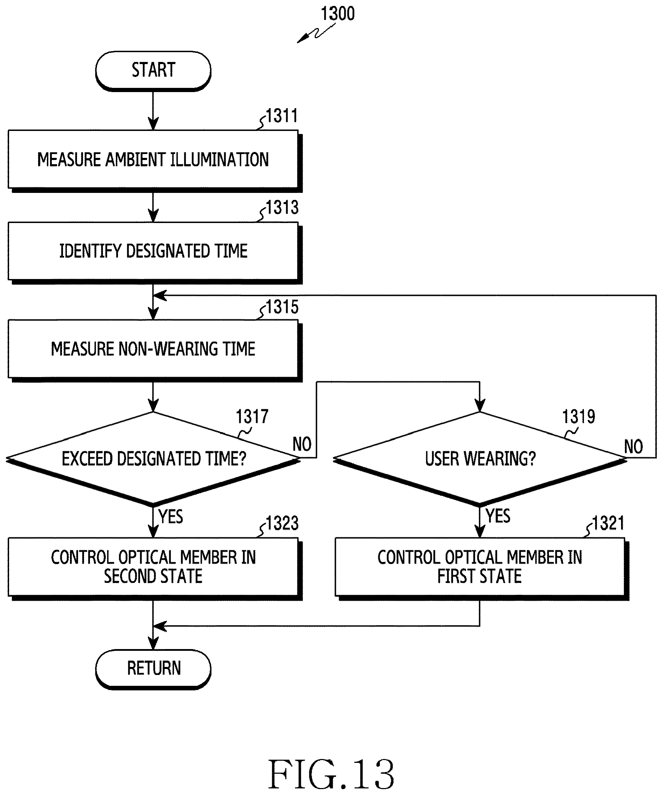

FIG. 13 is a detailed flowchart 1300 of operation 1117 for controlling an optical member 350 in a second state according to another embodiment.

Referring to FIG. 13, the electronic device 300 according to the other embodiment may measure ambient illumination in operation 1311. According to the other embodiment, the processor 2260 may measure the ambient illumination using the sensor 240. For example, the processor 2260 may measure the amount of the external light incident to an illumination sensor of the sensor 240. According to the other embodiment, the electronic device 300 may identify a designated time based on the ambient illumination. For example, the designated time may be lengthened, in response to relatively lower ambient illumination. More specifically, if the ambient illumination exceeds a designated illumination, the processor 260 may identify a first time period as the designated time. Then if the ambient illumination falls below the designated illumination, the processor 260 may identify a second time period longer than the first time period as the designated time.

According to the other embodiment, the electronic device 300 may measure the time period in which the user is not wearing the electronic device 300 in operation 1315. According to another embodiment, after identifying that the user is not wearing the electronic device 300, the processor 260 may start measuring the non-wearing time.

According to the other embodiment, as part of measuring the non-wearing time in operation 1315, the electronic device 300 may compare the non-wearing time with the designated time in operation 1317. According to another embodiment, the processor 260 may determine whether the non-wearing time exceeds the designated time. According to another embodiment, if the non-wearing time does not exceed the designated time in operation 1317 and the user is not identified as wearing the electronic device 300 in operation 1319, the electronic device 300 may return to operation 1315.

According to the other embodiment, if the non-wearing time does not exceed the designated time in operation 1317 and the user is identified as wearing the electronic device 300 in operation 1319, the electronic device 300 may control the optical member 250 to be in the first state in operation 1321. For example, the processor 260 may maintain the optical member 350 in the first state.

According to the other embodiment, if the non-wearing time exceeds the designated time in operation 1317, the electronic device 300 may control the optical member 350 to be in the second state in operation 1323. For example, the processor 260 may switch the optical member 350 from the first state to the second state.

An electronic device (e.g., the electronic device 300 of FIG. 3A through FIG. 5) according to an embodiment of the disclosure may include a housing (e.g., the housing 310 of FIG. 3A through FIG. 5) including a first surface (e.g., the first surface 310a of FIG. 5) for mounting a display panel (e.g., the display panel 410 of FIG. 7A), and a second surface (e.g., the second surface 310b of FIG. 5) for facing a user who wears the electronic device, a sensor (e.g., the sensors S1 and S2 of FIG. 5) disposed on the second surface to detect that the user is wearing the electronic device, one or more lenses (e.g., the optical lenses L1 and L2 of FIG. 7A) disposed between the first surface and the second surface of the housing (e.g., the housing 310 of FIG. 3A through FIG. 5), an optical member (e.g., the optical member 350 of FIG. 7A) having an adjustable permeation rate of external light incident to the one or more lenses (e.g., the optical lenses L1 and L2 of FIG. 7A) from outside of the electronic device, and a processor (e.g., the processor 260 of FIG. 2), wherein the processor (e.g., the processor 260 of FIG. 2) may be configured to, when the user is identified as wearing the electronic device, increase the adjustable permeation rate of the optical member (e.g., the optical member 350 of FIG. 7A), and when the user is identified as not wearing the electronic device, decrease the adjustable permeation rate of the optical member (e.g., the optical member 350 of FIG. 7A).

According to an embodiment of the disclosure, the processor (e.g., the processor 260 of FIG. 2) may be configured to measure a time period in which the user is not wearing the electronic device, and when the time period exceeds a designated time period, decrease the permeation rate of the optical member (e.g., the optical member 350 of FIG. 7A).

According to an embodiment of the disclosure, the processor (e.g., the processor 260 of FIG. 2) may be configured to measure ambient illumination surrounding the electronic device, and identify the designated time period based at least on the ambient illumination.

According to an embodiment of the disclosure, the optical member (e.g., the optical member 350 of FIG. 7A) may be a film disposed between the one or more lenses (e.g., the optical lenses L1 and L2 of FIG. 7A) and the display panel (e.g., the display panel 410 of FIG. 7A) and facing the one or more lenses and the display panel.

According to an embodiment of the disclosure, the optical member (e.g., the optical member 350 of FIG. 7A) may be disposed closer to the lenses (e.g., the optical lenses L1 and L2 of FIG. 7A) than the display panel (e.g., the display panel 410 of FIG. 7A).

According to an embodiment of the disclosure, the adjustable permeation rate of the optical member (e.g., the optical member 350 of FIG. 7A) may be adjusted according to a level of voltage or current applied to the optical member.

According to an embodiment of the disclosure, the display panel (e.g., the display panel 410 of FIG. 7A) may include a display panel mounted to an external electronic device 400.

According to an embodiment of the disclosure, the housing (e.g., the housing 310 of FIG. 3A through FIG. 5) may further include a face supporting member (e.g., the face supporting member 330 of FIG. 5) for supporting head mounting the electronic device (e.g., the electronic device 300 of FIG. 3A through FIG. 5), the sensor (e.g., the sensors S1 and S2 of FIG. 5) may be disposed on the face supporting member, and the sensor (e.g., the sensors S1 and S2 of FIG. 5) may include at least one of a pressure sensor, an illumination sensor or a proximity sensor.

According to an embodiment of the disclosure, the housing (e.g., the housing 310 of FIG. 3A through FIG. 5) may include a first housing and a second housing, the second housing may support the one or more lenses (e.g., the optical lenses L1 and L2 of FIG. 7A), may be coupled with the first housing, and at least one of an illumination sensor or a proximity sensor may be disposed in a partial area of the second housing between the one or more lenses.

According to an embodiment of the disclosure, an electronic device (e.g., the electronic device 300 of FIG. 3A through FIG. 5) may include a housing (e.g., the housing 310 of FIG. 3A through FIG. 5) including a first surface and a second surface which faces a user who wears the electronic device, a display panel (e.g., the display panel 410 of FIG. 7A) disposed between the first surface and the second surface of the housing, one or more lenses (e.g., the optical lenses L1 and L2 of FIG. 7A) disposed between the second surface of the housing and the display panel, an optical member (e.g., the optical member 350 of FIG. 7A) disposed between the display panel and the one or more lenses and having an adjustable permeation rate of external light incident to the one or more lenses, and a processor (e.g., the processor 260 of FIG. 2), and the processor may be configured to adjust an amount of the external light incident to the one or more lenses and transmitted to the display panel.

According to an embodiment of the disclosure, the optical member (e.g., the optical member 350 of FIG. 7A) may be disposed to face the one or more lenses (e.g., the optical lenses L1 and L2 of FIG. 7A), and may be disposed to be closer to the one or more lenses than the display panel (e.g., the display panel 410 of FIG. 7A).

According to an embodiment of the disclosure, the adjustable permeation rate of the optical member (e.g., the optical member 350 of FIG. 7A) may be adjusted based on if voltage or current is applied to the optical member, or the adjustable permeation rate of the optical member may be adjusted according to the level of the voltage or current applied to the optical member.

According to an embodiment of the disclosure, the electronic device (e.g., the electronic device 300 of FIG. 3A through FIG. 5) may further include a sensor disposed on the second surface, and when the user is identified as not wearing the electronic device, the processor (e.g., the processor 260 of FIG. 2) may be configured to decrease the adjustable permeation rate of the optical member (e.g., the optical member 350 of FIG. 7A).

According to an embodiment of the disclosure, an operating method of an electronic device (e.g., the electronic device 300 of FIG. 3A through FIG. 5) which includes a first surface (e.g., the first surface 310a of FIG. 5) for mounting a display panel (e.g., the display panel 410 of FIG. 7A), and a second surface (e.g., the second surface 310b of FIG. 5) facing away from the first surface to face a user, may include identifying whether the user is wearing the electronic device, when the user is identified as wearing the electronic device, controlling an optical member (e.g., the optical member 350 of FIG. 7A) disposed between the first surface and the second surface to be in a first state to transmit external light incident through one or more lenses, identifying whether the user is not wearing the electronic device, and when the user is identified as not wearing the electronic device, controlling the optical member (e.g., the optical member 350 of FIG. 7A) to be in a second state to reduce a concentration of the external light on the display panel.

According to an embodiment of the disclosure, controlling the optical member (e.g., the optical member 350 of FIG. 7A) to be in the second state may include decreasing a permeation rate of the optical member (e.g., the optical member 350 of FIG. 7A), to reduce the external light transmitted to the display panel.

According to an embodiment of the disclosure, controlling the optical member (e.g., the optical member 350 of FIG. 7A) to be in the second state may include increasing a scattering rate of the optical member (e.g., the optical member 350 of FIG. 7A), to scatter the external light passing through the optical member (e.g., the optical member 350 of FIG. 7A).

According to an embodiment of the disclosure, controlling the optical member (e.g., the optical member 350 of FIG. 7A) to be in the second state may include measuring a time period in which the user is not wearing the electronic device, and when the time period exceeds a designated time period, controlling the optical member (e.g., the optical member 350 of FIG. 7A) to be in the second state.

According to an embodiment of the disclosure, controlling the optical member (e.g., the optical member 350 of FIG. 7A) to be in the second state may include measuring ambient illumination surrounding the electronic device, and identifying the designated time period based at least on the ambient illumination.

According to an embodiment of the disclosure, the method may further include, when the time period is shorter than the designated time period, identifying whether the user is wearing the electronic device, and when the user is identified as wearing the electronic device, controlling the optical member (e.g., the optical member 350 of FIG. 7A) to be in the first state.

According to an embodiment of the disclosure, controlling the optical member (e.g., the optical member 350 of FIG. 7A) to be in the first state may include increasing the permeation rate of the optical member (e.g., the optical member 350 of FIG. 7A), or decreasing the scattering rate of the optical member (e.g., the optical member 350 of FIG. 7A).

An electronic device such as a VR device according to certain embodiments of the disclosure may prevent heating or burning of a display panel caused by an optical lens (e.g., a convex lens).

Specifically, to address the above-disclosed problem, when the electronic device is not worn, certain embodiments of the disclosure may prevent the display panel from heating or burning. This may be accomplished by diffusing the light through the convex lenses, reducing permeation of the light through the convex lenses, or blocking the light through the convex lenses.

While the disclosure has been shown and described with reference to various embodiments thereof, it will be understood by those skilled in the art that various changes in form and details may be made therein without departing from the spirit and scope of the disclosure as defined by the appended claims and their equivalents.

Certain of the above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein

## Claims

1. An electronic device comprising:
a housing comprising a first surface for mounting a display panel, and a second surface for facing a user who wears the electronic device;
a sensor disposed on the second surface to detect that the user is wearing the electronic device;
one or more lenses disposed between the first surface and the second surface of the housing;
an optical member having an adjustable permeation rate of external light incident to the one or more lenses from outside of the electronic device; and
a processor,
wherein the processor is configured to,
when the user is identified as wearing the electronic device, increase the adjustable permeation rate of the optical member, and
when the user is identified as not wearing the electronic device, decrease the adjustable permeation rate of the optical member.

2. The electronic device of claim 1, wherein the processor is further configured to:
measure a time period in which the user is not wearing the electronic device; and
when the time period exceeds a designated time period, decrease the adjustable permeation rate of the optical member.

3. The electronic device of claim 2, wherein the processor is further configured to:
measure ambient illumination surrounding the electronic device; and
identify the designated time period based at least on the ambient illumination.

4. The electronic device of claim 1, wherein the optical member is a film disposed between the one or more lenses and the display panel and facing the one or more lenses and the display panel.

5. The electronic device of claim 4, wherein the optical member is disposed closer to the lenses than the display panel.

6. The electronic device of claim 1, wherein the adjustable permeation rate of the optical member is adjusted according to a level of voltage or current applied to the optical member.

7. The electronic device of claim 1, wherein the display panel comprises a display panel mounted to an external electronic device.

8. The electronic device of claim 1, wherein the housing further comprises a face supporting member for supporting head mounting the electronic device,
wherein the sensor is disposed on the face supporting member,
wherein the sensor is a pressure sensor, an illumination sensor, and/or a proximity sensor.

9. The electronic device of claim 1, wherein the housing comprises a first housing and a second housing,
wherein the second housing supports the one or more lenses, is coupled with the first housing, and
wherein an illumination sensor or a proximity sensor is disposed in a partial area of the second housing between the one or more lenses.

10. An electronic device comprising:
a housing comprising a first surface and a second surface which faces a user who wears the electronic device;
a display panel disposed between the first surface and the second surface of the housing;
one or more lenses disposed between the second surface of the housing and the display panel;
an optical member disposed between the display panel and the one or more lenses and having an adjustable permeation rate of external light incident to the one or more lenses; and
a processor,
wherein the processor is configured to,
adjust an amount of the external light incident to the one or more lenses and transmitted to the display panel.

11. The electronic device of claim 10, wherein the optical member is disposed to face the one or more lenses, and is disposed to be closer to the one or more lenses than the display panel.

12. The electronic device of claim 10, wherein the adjustable permeation rate of the optical member is adjusted based on if voltage or current is applied to the optical member, or
wherein the adjustable permeation rate of the optical member is adjusted according to a level of the voltage or current applied to the optical member.

13. The electronic device of claim 10, further comprising:
a sensor disposed on the second surface,
wherein, when the user is identified as not wearing the electronic device, the processor is further configured to decrease the adjustable permeation rate of the optical member.
